# EUROPEAN PATENT APPLICATION

(11) **EP 4 600 140 A1**
(43) Date of publication of application: **13.08.2025**
(21) Application number: 24275006.5
(22) Date of filing: 07.02.2024
(51) Int. Cl.: B64C 1/06, B64C 1/08, B64C 1/12

(54) **STRUCTURAL ASSEMBLIES FOR AIRCRAFT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A structural assembly for an aircraft comprises: a frame structure comprising a plurality of structural members each having a longitudinal axis; at least one skin arranged on the frame structure; and at least one connecting element. The at least one connecting element comprises: a first portion configured to conformably interface with at least a portion of the at least one skin; and a second portion configured to rotationally receive at least a portion of one of said structural members, such that said connecting element is rotationally movable relative to said structural member about the longitudinal axis thereof. A method of manufacturing a structural component for an aircraft comprises providing said structural assembly; arranging the at least one connecting element on said structural member; rotationally adjusting the at least one connecting element relative to said structural member; arranging the at least one skin on the first portion of the at least one connecting element; attaching the at least one connecting element to said structural member; and attaching the at least one skin on the first portion of the at least one connecting element.

## Description

### FIELD

The present invention relates to structural assemblies for aircraft, and associated manufacturing methods thereof.

### BACKGROUND

Load-bearing structures for products such as aircraft can be costly and complicated to manufacture in order to meet the demands of the design specification. In the case of aircraft, large amounts of flying hours, for example around 4000 hours, can require airframes which need to be able to withstand considerable amounts of fatigue and the mechanical effects of certain frequencies on joints and other mechanical interfaces. These fatigue requirements, along with other requirements such as aerodynamic considerations, can add considerable mass, cost and complexity to the aircraft design, resulting in complex production methods and processes.

In addition, in the aircraft industry in particular, relatively tight manufacturing tolerances are required, particularly with regard to the outer mould line (OML) and inner mould line (IML) of aircraft skins, for example, for aerodynamic reasons. In order to compensate for variations in manufacturing, to accurately control the CAD nominal interfaces between primary structures such as fuselages and wings with skins, panels and doors etc., such accumulated tolerances built up during the assembly process have to be corrected at the assembly stage. Thus, in the manufacture of aircraft structure assemblies, the contact faces between a traditional substructure and the OML and/or IML of a skin are often machined back to meet computer aided design (CAD) nominal post manufacture dimensions, as tolerances accumulated during the assembly process may not be sufficiently acceptable. This results in complex, cumbersome and costly machining operations. Insufficient tolerances can also result from variations in composite skin layup thicknesses, and as a result of variations in sub structures held in jigs, and the OML thereof.

Additionally, such machining can also result in increased tooling costs, thus further increasing the cost of manufacturing an aircraft. Such machining processes for controlling CAD nominal interfaces can also disadvantageously result in increased mass because additional material is required initially to allow for the necessary geometry to be machined away, inefficiently leaving excess material, thus resulting in decreased performance and an increased industrial footprint of the resulting aircraft.

The present disclosure seeks to alleviate, at least to a certain degree, the problems and/or address at least to a certain extent, the difficulties associated with the prior art.

### SUMMARY

According to a first aspect of the present invention, there is provided a structural assembly for an aircraft, comprising: a frame structure comprising a plurality of structural members each having a longitudinal axis; at least one skin arranged on the frame structure; and at least one connecting element. The at least one connecting element comprises: a first portion configured to conformably interface with at least a portion of the at least one skin; and a second portion configured to rotationally receive at least a portion of one of said structural members, such that said connecting element is rotationally movable relative to said structural member about the longitudinal axis thereof.

Advantageously, the at least one connecting element being rotationally movable relative to said structural member about said longitudinal axis provides that said connecting element can be quickly and easily adjusted at the assembly stage during the manufacture of a structural component for an aircraft. In particular, said connecting element can be adjusted to result in a corresponding adjustment of the corresponding portion of the at least one skin, for example by pushing or otherwise manipulating it into position to correspond with the desired CAD nominal interfaces, such that said skin is positioned in the desired position and orientation, to control an OML and/or IML thereof. Accurate OML and/or IMLs can thus be achieved with no post processing required. Such an assembly thus provides for a less complex means to more accurately control the CAD nominal interfaces between primary load-bearing structures and skins in aircraft components. The tight tolerances typically required in aircraft manufacture can thus be achieved without the need for complex and costly machining processes to compensate for accumulated tolerances built up during the assembly process. Associated tooling costs can also be reduced. Advantageously, cost, complexity, mass and industrial footprint savings are thus provided, by enabling a reduction in manufacturing processes and resources, whilst providing build advantages with accurate and adjustable characteristics.

Optionally, the frame structure comprises a truss structure, such as a warren truss or a geodesic truss.

Advantageously, such a frame structure can serve as a primary load-bearing structure of the structural assembly, and has reduced mass, and may be suitable for applications requiring relatively lower amounts of flying hours, such as an unmanned aerial vehicle (UAV). Such a frame structure can also allow for a modular and bespoke construction of the structural assembly, providing for flexibility in the design of a structural component for an aircraft. Furthermore, such a truss structure may be hollow, thus providing for the frame structure to serve another function as well as being a primary load-bearing structure, for example, to serve a thermodynamic and/or storage purpose.

Optionally, the frame structure is configured to be a primary load-bearing structure of the structural assembly.

Optionally, the frame structure is configured to transmit a load from a first end of the frame structure towards a second end of the frame structure.

Optionally, the at least one connecting element is arranged between the at least one skin and the frame structure.

Optionally, each of the plurality of structural members is generally cylindrical.

Optionally, each of the plurality of structural members has a generally round cross-sectional profile, for example, a generally circular cross-sectional profile.

Advantageously, this provides that the at least one connecting element can easily rotate about the respective structural member, to provide for quick and easy adjustment of said connecting element during the assembly of a structural component.

Optionally, the structural members are generally hollow and may be in fluid communication with one another to provide a first fluid flow path for the flow of a first fluid inside the frame structure, and wherein a second fluid is configured to flow around the frame structure in a second fluid flow path, such that the first fluid is in heat exchange with the second fluid.

Advantageously, the frame structure can thus be configured to act as a heat exchanger, to provide a thermodynamic function as well as a load-bearing function. Utilising the frame structure both thermodynamically and mechanically can provide for a further reduction in complexity, cost, and mass, in the design and manufacture of an aircraft.

Optionally, the first fluid is fuel or air.

Advantageously, the frame structure can thus be used to store fuel for example, resulting in a reduction in volume and mass of an aircraft component, by efficiently utilising the space inside the structural members to store fuel. Advantageously, the frame structure can alternatively be used to provide for heat exchange between air and the second fluid.

Optionally, the structural members are hollow, and one or more wires are arranged inside the structural members.

Advantageously, the frame structure can thus be used to house one or more wires, to efficiently utilise the space inside the structural members, thus resulting in a reduction in volume and mass of an aircraft component.

Optionally, the at least one skin comprises an outer mould line and an inner mould line, and at least a portion of the inner mould line is configured to conformably interface with the first portion of the at least one connecting element.

Advantageously, adjustment of the at least one connecting element by said rotational movement about the longitudinal axis of said structural member can thus provide for accurate control of the inner mould line of the at least one skin, without the need for complex and costly post processing machining operations, to achieve CAD nominal interfaces.

Optionally, the at least one skin comprises a panel element.

Optionally, the panel element is a panel of an aircraft component.

Optionally, the panel element is a panel of an aircraft door.

Optionally, the at least one skin comprises a first skin and a second skin, wherein the first skin is an outer skin of an aircraft component and is configured to be arranged on an outer surface of the frame structure, and wherein the second skin is an inner skin of an aircraft component and is configured to be arranged on an inner surface of the frame structure.

Advantageously, adjustment of the at least one connecting element can thus provide for accurate control of the outer and inner skins of an aircraft component, without the need for complex and costly post processing machining operations, to achieve CAD nominal interfaces.

Optionally, a first at least one connecting element is configured to interface with the first skin, and a second at least one connecting element is configured to interface with the second skin.

Optionally, the first and second at least one connecting elements are arranged opposite one another about said structural member.

Optionally, the first and second at least one connecting elements are arranged to be diametrically opposed to one another about the circumference of said structural member.

Advantageously, adjustment of the first and second connecting elements can provide for accurate control of the outer and inner skins of an aircraft component, without the need for complex and costly post processing machining operations, to achieve CAD nominal interfaces.

Optionally, each of the at least one connecting elements is generally elongate and is arranged to be generally parallel to the longitudinal axis of its respective structural member.

Advantageously, the connecting elements can thus provide for an improved conformal interface between the frame structure and the at least one skin. Furthermore, the connecting elements can thus provide for a simplified modular construction of a structural component for an aircraft, for example, because they may be cut to length to assemble a bespoke modular structure.

Optionally, each of the at least one connecting elements comprises a first bracket element and a second bracket element, the first bracket element comprising said first portion of the connecting element, and the second bracket element comprising said second portion of the connecting element, wherein the first bracket element comprises a receiving portion configured to slidably receive at least a portion of the second bracket element.

Advantageously, this provides for a further level of adjustment in the at least one connecting element relative to the frame structure, and thus also of the at least one skin to achieve CAD nominal interfaces without the need for complex and costly post processing machining operations. This is because by the first bracket element slidably receiving the second bracket element, the first and second bracket elements can thus be moved relative to one another, to provide a further degree of freedom in the adjustment of the at least one connecting element and the at least one skin. CAD nominal interfaces can thus be more accurately achieved more quickly and easily.

Optionally, the first bracket element is configured to be rotationally fixed relative to the second bracket element about the longitudinal axis of the respective structural member.

Advantageously, the first bracket element can thus be rotationally adjusted relative to the structural member together with the second bracket element.

Optionally, the first bracket element has a generally pi-shaped cross-sectional profile and the second bracket element has a generally C-shaped cross-sectional profile.

Advantageously, the first and second bracket elements can thus be manufactured as generally elongate profiles, and can be configured to mate with and slide relative to one another.

Optionally, the first bracket element comprises two bracket portions each having a generally L-shaped cross-sectional profile.

Optionally, the two bracket portions are arranged to be symmetrically opposed to one another.

Optionally, each of the at least one connecting elements is configured to be movable relative to its respective structural member in: a first degree of freedom corresponding with said rotational movement about said longitudinal axis, and in a second degree of freedom corresponding with a first linear movement relative to said structural member.

Advantageously, said connecting element can thus be adjusted in two degrees of freedom, to provide for improved compensation for accumulated tolerances built up during the assembly process, so that the at least one skin can be manipulated into position both rotationally and linearly to more accurately and more easily achieve CAD nominal interfaces.

Optionally, the first linear movement is generally parallel to said longitudinal axis.

Advantageously, said connecting element can thus be configured to slide or otherwise translate relative to said structural member along the length thereof, in a generally axial movement, to provide for axial adjustment of said connecting element and hence of the at least one skin, to more accurately and more easily achieve CAD nominal interfaces.

Optionally, the at least one skin is arranged to be generally parallel to and spaced apart from the frame structure, and wherein the first linear movement is generally perpendicular to said longitudinal axis, such that the spacing between the at least one skin and the frame structure is adjustable.

Advantageously, said connecting element can thus be configured to slide or otherwise translate vertically, i.e. in the z direction, relative to said structural member, so that the spacing between the at least one skin and the frame structure can be adjusted to be increased or decreased as required during the assembly process. Such vertical adjustment in the z direction advantageously provides for improved compensation for accumulated tolerances built up during the assembly process, so that the at least one skin can be manipulated into position both rotationally and vertically relative to said structural member, to more accurately and more easily achieve CAD nominal interfaces.

Optionally, the at least one skin is arranged to be at an angle relative to said longitudinal axis of said structural member, wherein at a first location on said skin, the skin is arranged to be spaced apart from the frame structure by a first spacing, and wherein at a second location on said skin, the skin is arranged to be spaced apart from the frame structure by a second spacing, wherein the second spacing is greater than the first spacing.

Optionally, the at least one skin is arranged to be at an angle relative to said longitudinal axis of said structural member, wherein at a first location along said longitudinal axis thereof, the skin is arranged to be spaced apart from the structural member by a first spacing, and wherein at a second location along said longitudinal axis, the skin is arranged to be spaced apart from the structural member by a second spacing that is greater than the first spacing.

Advantageously, the at least one connecting element may thus be linearly movable relative to said structural member in a diagonal movement corresponding with a seesaw-like motion, such that the at least one skin may be adjusted to be non-parallel to the relevant respective structural member, and hence may be arranged to be non-parallel to the frame structure, to more accurately control the CAD nominal interfaces.

Optionally, the first bracket element is configured to be slidable relative to the second bracket element in the second degree of freedom.

Advantageously, the first bracket element and the second bracket element are thus movable relative to one another in a linear direction relative to said structural member, for example in a direction which is either parallel or perpendicular relative to the longitudinal axis thereof. Such movement of the first and second bracket elements relative to one another advantageously provides for a further level of control and accuracy in compensating for accumulated tolerances and manipulating the at least one skin into the desired position to achieve CAD nominal interfaces.

Optionally, the first linear movement is parallel to said longitudinal axis, such that the first bracket element is configured to be axially movable relative to the second bracket element along said longitudinal axis.

Optionally, each of the at least one connecting elements is configured to be movable relative to its respective structural member in a third degree of freedom corresponding with a second linear movement relative to the first structural member, wherein the second linear movement is generally perpendicular to the first linear movement.

Advantageously, said connecting element can thus be adjusted in three degrees of freedom, to provide for improved compensation for accumulated tolerances built up during the assembly process, so that the at least one skin can be manipulated into position both rotationally and linearly in two directions, for example vertically in the z direction and axially relative to the longitudinal axis of the structural member, to more accurately and more easily achieve CAD nominal interfaces.

Optionally, the at least one skin and the at least one connecting element comprise one or more apertures configured to receive one or more fastening elements configured to couple the at least one skin to the at least one connecting element.

Advantageously, the at least one skin can thus, for example, be mechanically fixed to the at least one connecting element once it has been manipulated into the desired position, for example by a bolt or screw or the like, requiring no interface machining to achieve CAD nominal interfaces to an acceptable tolerance, and using less time and fewer resources to fix the at least one skin in position.

Optionally, the at least one skin comprises a carbon fibre composite material, an automated fibre placement material, and/or aluminium.

Advantageously, such an at least one skin can be lightweight and/or may be curable directly to or via an adhesive to bond it to the at least one connecting element.

Optionally, the frame structure is an additively manufactured, cast, forged, welded, metallic, composite, and/or metallic composite hybrid frame structure.

Advantageously, such a frame structure can be lightweight and/or may be curable directly to or via an adhesive to bond it to the at least one connecting element.

Optionally, the at least one connecting element comprises a metallic and/or composite material.

Advantageously, such a connecting element can be lightweight and/or may be curable directly to or via an adhesive to bond it to the frame structure and/or to the at least one skin.

Optionally, the structural assembly is an aircraft fuselage, wing or door.

Advantageously, such an aircraft fuselage, wing or door may have improved tolerance accuracy and hence improved mechanical and aerodynamic properties, and may be manufactured at a reduced complexity, cost and mass.

Optionally, the aircraft is an unmanned aerial vehicle (UAV).

According to a second aspect of the present invention, there is provided a method of manufacturing a structural component for an aircraft, the method comprising: providing a structural assembly according to the first aspect of the present invention; arranging the at least one connecting element on said structural member; rotationally adjusting the at least one connecting element relative to said structural member; arranging the at least one skin on the first portion of the at least one connecting element; attaching the at least one connecting element to said structural member; and attaching the at least one skin on the first portion of the at least one connecting element.

Advantageously, such a method provides for the manufacture of a structural component for an aircraft with improved tolerance accuracy and hence improved mechanical and aerodynamic properties, by removing the need for complex post processing machining operations to control CAD nominal interfaces, and may be manufactured at a reduced complexity, cost and mass. In particular, rotationally adjusting the at least one connecting element relative to said structural member, provides that the connecting element can be quickly and easily adjusted at the assembly stage during the manufacture of a structural component for an aircraft. This results in a corresponding adjustment of the corresponding portion of the at least one skin, so that the at least one skin can effectively be pushed or otherwise manipulated into position to correspond with the desired CAD nominal interfaces, such that said skin is positioned in the desired position and orientation, to control an OML and/or IML thereof. Accurate OML and/or IMLs can thus be achieved with little or no post processing required. The method thus eliminates, or at least significantly reduces, the need for complex machining operations to bring interfaces to CAD nominal dimensions post assembly, to compensate for tolerances built up during the assembly process. Such a method thus advantageously provides for a less complex means to more accurately control the CAD nominal interfaces between primary load-bearing structures and skins in aircraft components. The tight tolerances typically required in aircraft manufacture can thus be achieved without the need for complex and costly machining processes to compensate for accumulated tolerances built up during the assembly process. Associated tooling costs can also be reduced. Advantageously, cost, complexity, mass and industrial footprint savings are thus provided, by enabling a reduction in manufacturing processes and resources, whilst providing build advantages with accurate and adjustable characteristics. Furthermore, such a method allows for deviances in material thickness and structural warping, whilst still achieving CAD nominal interfaces for OMLs and IMLs.

Optionally, the method further comprises:
applying adhesive to said structural member and/or to the second portion of the at least one connecting element;
applying adhesive to said at least one skin and/or the first portion of the at least one connecting element; and
curing said adhesive to bond said at least one connecting element to said structural member and to said at least one skin.

Advantageously, the at least one skin can thus be fixed in place by curing on the frame structure in the desired position to meet CAD nominal interfaces, once it has been adjusted to compensate for accumulated tolerances built up during the assembly process.

Optionally, the method comprises applying adhesive to the at least one connecting element and said structural member before the at least one connecting element is adjusted relative to said structural member, and then curing said adhesive to bond the at least one connecting element and the structural member after said adjustment has taken place.

Optionally, the method comprises arranging the at least one skin on the first portion of the at least one connecting element after the at least one connecting element has been bonded to said structural member.

Optionally, the method further comprises:
attaching the at least one skin to the at least one connecting element via one or more mechanical fastening means.

Advantageously, the at least one skin can thus, for example be mechanically fixed to the at least one connecting element once it has been manipulated into the desired position, for example by a bolt or screw or the like, requiring no interface machining to achieve CAD nominal interfaces to an acceptable tolerance, and using less time and fewer resources to fix the at least one skin in position.

Optionally, the method further comprises linearly adjusting the at least one connecting element relative to said structural member.

Advantageously, said connecting element can thus be adjusted in two degrees of freedom, including a rotational degree of freedom and a linear degree of freedom, to provide for improved compensation for accumulated tolerances built up during the assembly process, so that the at least one skin can be manipulated into position both rotationally and linearly to more accurately and more easily achieve CAD nominal interfaces.

Optionally, the method comprises rotationally adjusting the at least one connecting element relative to said structural member in a first degree of freedom corresponding with said rotational movement about said longitudinal axis.

Optionally, the method comprises adjusting the at least one connecting element relative to said structural member in at least two degrees of freedom, including a first degree of freedom corresponding with said rotational movement about said longitudinal axis, and a second degree of freedom corresponding with a first linear movement relative to said structural member.

Optionally, the first linear movement is generally parallel to or perpendicular to said longitudinal axis.

Optionally, the method further comprises adjusting the at least one connecting element relative to said structural member in a third degree of freedom corresponding with a second linear movement relative to said structural member, wherein the second linear movement is generally perpendicular to the first linear movement.

Optionally, the method comprises rotationally and/or linearly adjusting the at least one connecting element relative to said structural member, to correspond with a desired outer mould line and/or with a desired inner mould line of the at least one skin.

Optionally, the method comprises rotationally and/or linearly adjusting the at least one connecting element relative to said structural member, to correspond with a desired CAD nominal interface of the at least one skin.

Optionally, the step of rotationally adjusting the at least one connecting element relative to said structural member takes place before the at least one connecting element is attached to said structural member.

Optionally, the step of rotationally adjusting the at least one connecting element relative to said structural member takes place before the at least one skin is arranged on the first portion of the at least one connecting element.

Advantageously, the at least one connecting element can thus be adjusted into position before the at least one skin is arranged thereon, to further reduce or eliminate post assembly machining operations required to said skin.

Optionally, the method comprises arranging a first skin on an outer surface of the frame structure, and a second skin on an inner surface of the frame structure.

Optionally the method comprises adjusting a first at least one connecting element configured to interface with the first skin to correspond with a desired outer mould line and/or with a desired inner mould line thereof, and adjusting a second at least one connecting element configured to interface with the second skin to correspond with a desired outer mould line and/or with a desired inner mould line thereof.

Optionally, the method further comprises arranging the plurality of structural members in a truss structure, such as a warren truss or a geodesic truss, to assemble the frame structure.

Optionally, the method further comprises filling the structural members, wherein said structural members are generally hollow, with a fluid such as a fuel.

Optionally, the method further comprises, wherein the structural members are generally hollow, arranging one or more wires and/or electriconic components inside the structural members.

Optionally, the method further comprises using a laser tracking device to determine the position of the at least one connecting element and/or the position of the at least one skin.

Optionally, the method comprises comparing said positions with a CAD nominal interface.

Optionally, the method comprises adjusting the at least one connecting element relative to said structural member based on data obtained from the laser tracking device.

Optionally, the structural assembly provided in the method comprises one or more of the aforementioned optional features of the first aspect of the present invention.

### BRIEF DESCRIPTION OF THE FIGURES

Embodiments of the invention will now be described by way of example only with reference to the figures, in which:
Figure 1 shows an exemplary structural assembly for an aircraft;
Figure 2 shows the structural assembly of Figure 1 with a portion of an outer skin thereof shown as being transparent for illustrative purposes only, to show the internal structure of said assembly;
Figure 3 shows a close-up view of the structural assembly shown in Figure 2;
Figure 4 shows the structural assembly of Figure 2 with a portion of the assembly removed for illustrative purposes only, to further show the internal structure of said assembly;
Figure 5 shows an end view of the structural assembly of Figure 1;
Figure 6 shows a side view of the structural assembly of Figure 2;
Figure 7 shows a side view of the structural assembly of Figure 4;
Figure 8 shows a portion of the inside of the structural assembly of Figure 1;
Figure 9 shows an axial cross-sectional view of a portion of the structural assembly of Figure 1;
Figure 10 shows an axial cross-sectional view of a portion of an embodiment of the structural assembly of Figure 1;
Figure 11 shows a side view of a portion of the inside of the structural assembly of Figure 1 in a first condition;
Figure 12 shows a side view of a portion of the inside of the structural assembly of Figure 1 in a second condition;
Figure 13 shows a side view of a portion of the inside of the structural assembly of Figure 1 in a third condition; and
Figure 14 shows a cross-sectional view of a portion of the inside of an embodiment of the structural assembly of Figure 1.

### DETAILED DESCRIPTION

The present invention provides structural assemblies for aircraft, and associated manufacturing methods thereof, which have improved tolerances and thus negate the need for complex and costly post assembly machining operations to bring the OML and/or IML of a skin in line with CAD nominal tolerances.

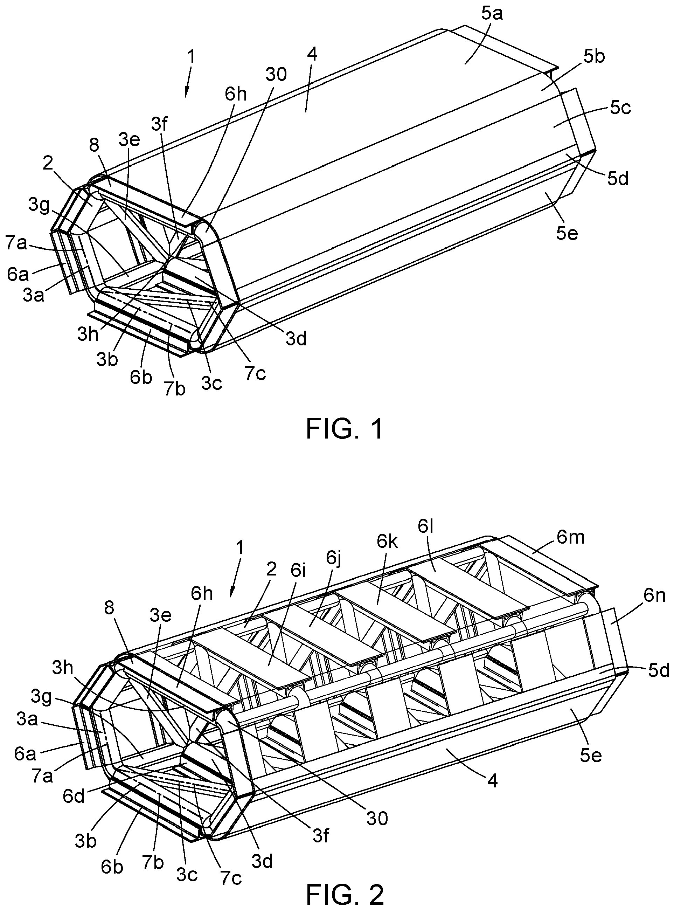

Figure 1 shows a structural assembly 1 for an aircraft. The structural assembly 1 may be an aircraft fuselage, wing, or door, for example, but may be any other aircraft structure. The structural assembly 1 comprises a frame structure 2 on which a skin 4 is arranged. The frame structure 2 is configured to act as a primary load-bearing structure of the structural assembly 1, to transmit a load from a first end of the structural assembly 1 towards a second end of the structural assembly 1, and comprises a plurality of generally elongate structural members 3a, 3b, 3c, 3d, 3e, 3f, 3g, 3h etc., which are arranged, in the example illustrated, to form a warren truss. It is though also envisaged that the elongate structural members may alternatively be arranged to form any other type of truss structure, such as a geodesic truss, or any other suitable structure. Each of the structural members 3a, 3b, 3c, 3d, 3e, 3f, 3g, 3h has a respective longitudinal axis 7a, 7b, 7c, 7h etc.

The skin 4 may be a panel of an aircraft component such as an aircraft fuselage or door panel, and comprises a plurality of skin portions 5a, 5b, 5c, 5d, 5e etc., which are arranged on an outer surface of the frame structure 2 and which are arranged to generally conform with the shape of the frame structure 2. A plurality of connecting elements 6a, 6b, 6d, 6h, 6i, 6j, 6k, 61, 6m, 6n etc. are arranged between the skin 4 and the frame structure 2. Each of the connecting elements 6a, 6b, 6d, 6h, 6i, 6j, 6k, 6l, 6m, 6n is arranged to be generally parallel to the longitudinal axis 7a, 7b, 7c, 7h of its respective structural member 3a, 3b, 3c, 3d, 3e, 3f, 3g, 3h.

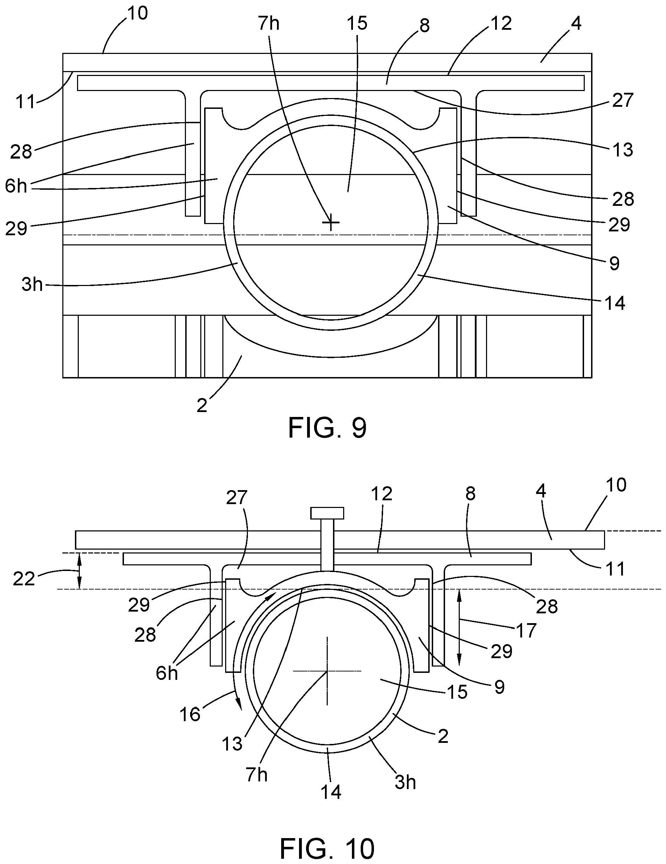

As shown in Figures 9 and 10, each of the connecting elements 6a, 6b, 6d, 6h, 6i, 6j, 6k, 6l, 6m, 6n has a first portion 12 which conformably interfaces with a portion of the skin 4, and a second portion 13 which is generally curved and rotationally receives a respective one of the structural members 3a, 3b, 3c, 3d, 3e, 3f, 3g, 3h. For example, the connecting element 6h has a first portion 12 which conformably interfaces with skin portion 5a of the skin 4, and a second portion 13 which rotationally receives the structural member 3h. In the example illustrated, the first portion 12 is generally flat and the second portion 13 is generally semicircular, however it is also envisaged that the first and second portions 12, 13 may be any other suitable shape, such that each of the connecting elements 6a, 6b, 6d, 6h, 6i, 6j, 6k, 6l, 6m, 6n is configured to conformably interface with the skin 4 and to rotationally receive at least a portion of one of the structural members 3a, 4b, 3c, 3d, 3e, 3f, 3g, 3h. In this manner, each of the connecting elements 6a, 6b, 6d, 6h, 6i, 6j, 6k, 6l, 6m, 6n is rotationally movable relative to its respective structural member 3a, 3b, 3c, 3d, 3e, 3f, 3g, 3h about its respective longitudinal axis.

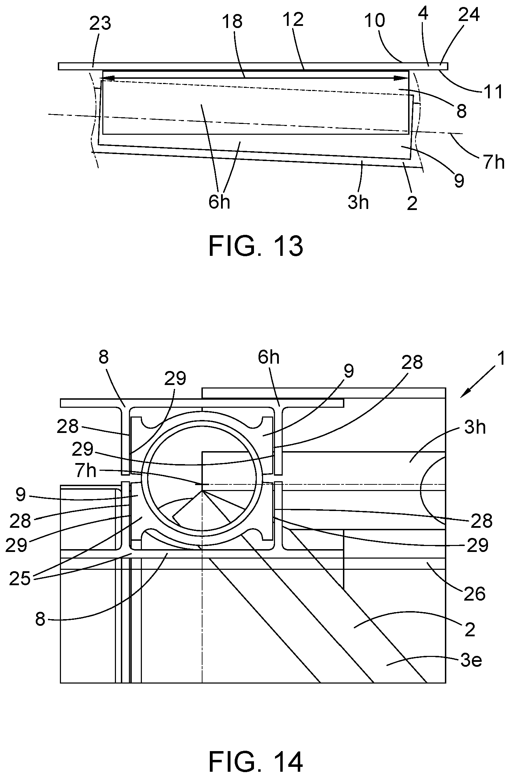

For example, the connecting element 6h is rotationally movable in direction 16 relative to the structural member 3h about its longitudinal axis 7h, as shown in Figure 10. The second portion 13 is geometrically shaped and sized to allow the second bracket element 9 to be able to turn about the longitudinal axis 7h of the structural member 3h. Too small a diameter for the curvature of the second portion 13 may not allow for a sufficient bond area between the structural member 3h and the connecting element 6h and may provide for low torsional bond line shear advantage. Thus, in the example illustrated, the second portion 13 is sized to encompass approximately 180 degrees of the circumference of the structural member 3h. However, in other examples, for example as described below in relation to the embodiment shown in Figure 14, the second portion 13 may be sized differently to permit a greater amount of rotational movement, particularly where there may be another connecting element 25 arranged on the same structural member 7h.

Turning back to Figure 1, each of the structural members 3a, 3b, 3c, 3d, 3e, 3f, 3g, 3h is generally cylindrical and is sized to correspond with the second portion 13 of a respective connecting element 6a, 6b, 6d, 6h, 6i, 6j, 6k, 6l, 6m, 6n, such that the rotational position about the respective longitudinal axis 7a, 7b, 7c, 7h of the respective connecting element 6a, 6b, 6d, 6h, 6i, 6j, 6k, 6l, 6m, 6n can be adjusted. In this manner, the consequent position and orientation of the skin 4, which conformably interfaces with the respective connecting element 6a, 6b, 6d, 6h, 6i, 6j, 6k, 6l, 6m, 6n can advantageously be adjusted, to compensate for tolerances accumulated during the assembly of the structural assembly 1, as described below in more detail.

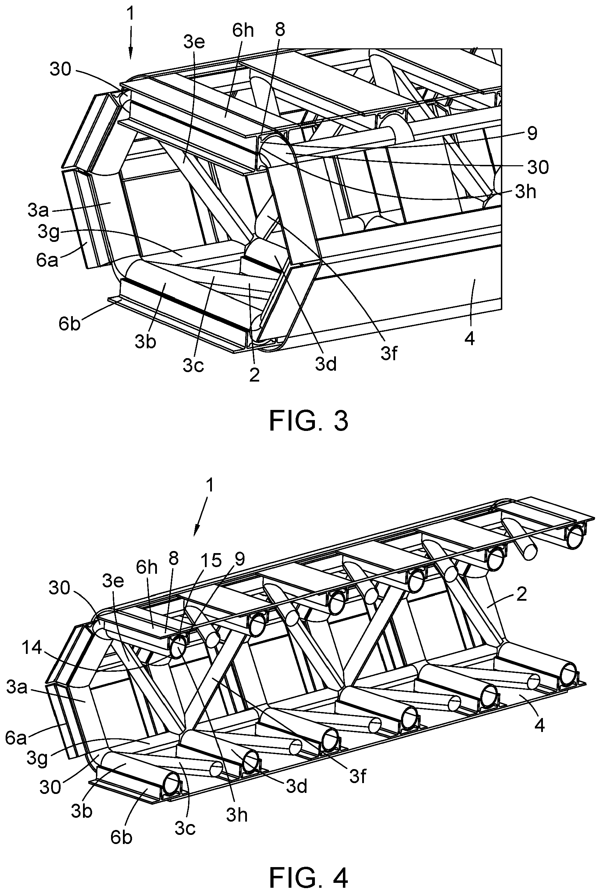

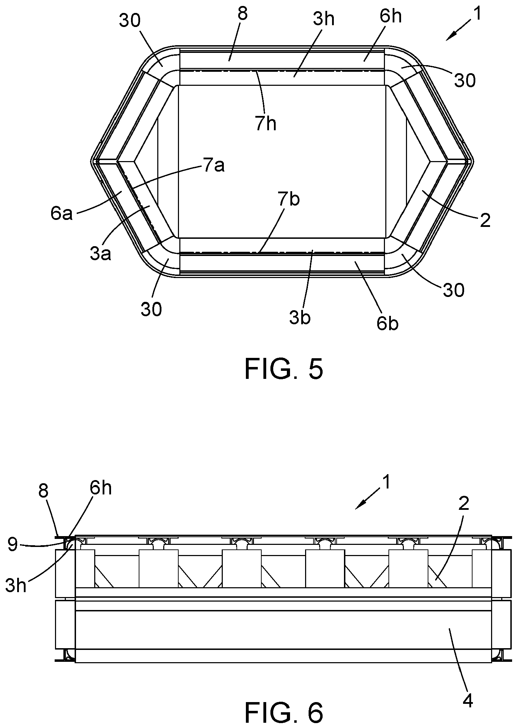

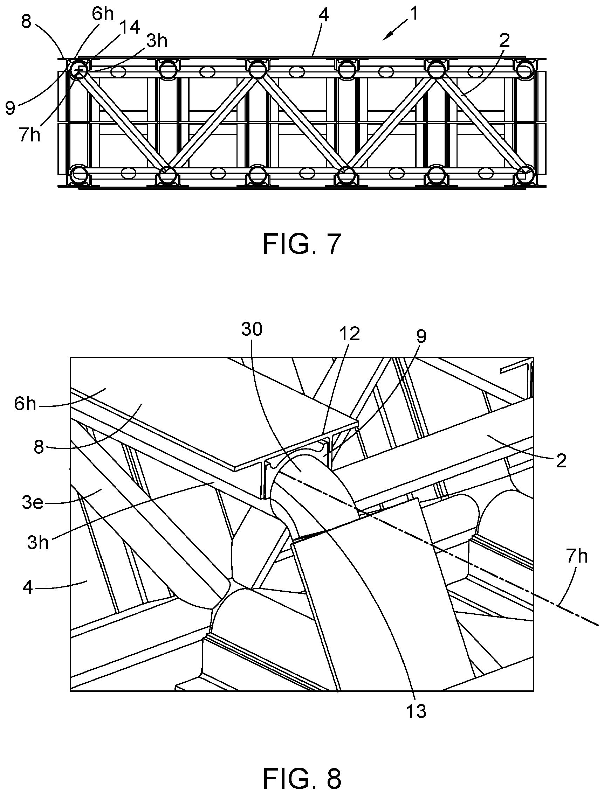

Figure 2 shows the structural assembly 1 with a portion of the skin 4 shown as being transparent, purely for illustrative purposes, to show an exemplary form of the frame structure 2. Figure 3 shows a close-up view of the structural assembly 1 shown in Figure 2. Similarly, Figures 6 and 7 show side views of the structural assembly 1 with a portion of the skin 4 being shown as being transparent, and with a portion of the assembly removed respectively, purely for illustrative purposes.

As shown, the exemplary frame structure 2 comprises a plurality of longitudinally oriented structural members (for example, structural member 3g), a plurality of transversely oriented structural members (for example, structural members 3b, 3d and 3h), and a plurality of diagonally oriented structural members (for example, structural members 3a, 3c, 3e and 3f) arranged to form the warren truss. As shown in Figure 5, the frame structure 2 further comprises a plurality of connecting members 30 arranged to join the structural members 3a, 3b, 3c, 3d, 3e, 3f, 3g, 3g to one another. Advantageously, a warren truss provides that the internals of the structural assembly 1 are clear of frame webs etc., so that other components such as intake ducts (not shown) may be arranged to pass through the primary load-bearing structure unhindered. Furthermore, a warren truss advantageously provides for management of the loads of the vehicle, meaning that the skin 4 need not necessarily be configured to provide a structural function, meaning that increased flexibility in skin design and panel configurations can be achieved. A warren truss structure may be suitable for applications requiring relatively low amounts of flying hours, due to decreased fatigue life requirements, such as an unmanned aerial vehicle (UAV).

Each of the transversely and diagonally oriented structural members 3a, 3b, 3h forming the outer surface of the frame structure 2 has a respective connecting element 6a, 6b, 6h arranged on it to conform with a portion of the skin 4. As such, a plurality of connecting elements 6a, 6b, 6d, 6h, 6i, 6j, 6k, 6l, 6m, 6n are arranged to conformably interface the skin 4 with the frame structure 2. The frame structure 2 is further visible in Figure 4 which shows a portion of the structural assembly 1 removed, purely for illustrative purposes, to show the internal structure thereof.

Turning now to Figure 8, the configuration of the connecting elements 6a, 6b, 6d, 6h, 6i, 6j, 6k, 6l, 6m, 6n shall now be described, with reference to connecting element 6h, with the features and functionality described also being applicable to the other connecting elements 6a, 6b, 6d, 6i, 6j, 6k, 6l, 6m, 6n. In the example shown herein, the connecting element 6h comprises a first bracket element 8 and a second bracket element 9. The first bracket element 8 comprises the first portion 12 of the connecting element 6h, and the second bracket element 9 comprises the second portion 13. However, it should be noted that the connecting element 6h may alternatively comprise a single, unitary bracket element, comprising both the first and section portions 12, 13 in one homogeneous piece. As described below in more detail, having two bracket elements 8, 9 can be advantageous in terms of providing for a further level of adjustment of the skin 4 relative to the frame structure 2, however where desired or where sufficient, one singular piece may be used to form the connecting element 6h.

Turning now to Figure 9, the first bracket element 8 has a generally pi-shaped cross-sectional profile, and the second bracket element 9 has a generally C-shaped cross-sectional profile. The top surface of the pi-shaped cross-sectional profile of the first bracket element 8 forms the first portion 12 of the connecting element 6h, and the inner concave surface of the C-shaped cross-sectional profile of the second bracket element 9 forms the second portion 13 of the connecting element 6h. The first bracket element 8 further comprises a receiving portion 27 configured to slidably receive the second bracket element 9. It is though envisaged that the first and second bracket elements 8, 9 may have any other suitable cross-sectional profiles, for example any other suitable shapes which may also provide that the second bracket element 9 can be received in the first bracket element 8, and that the first and second portions 12, 13 of the connecting element 6h are provided. For example, the first bracket element 8 may alternatively comprise two L-shaped bracket portions arranged back to back.

As shown in Figures 9 and 10, the first bracket element 8 comprises vertical side walls 28 which are configured to conform with vertical side walls 29 of the second bracket element 9. That is, the side walls 28 and 29 are configured to be generally planar and parallel to one another, such that the first and second bracket elements 8, 9 can linearly slide relative to one another, but such that the first bracket element 8 is configured to be rotationally fixed relative to the second bracket element 9 about the longitudinal axis 7h of the structural member 3h. As such, whilst the second bracket element 9 of the connecting element 6h is configured to be rotationally movable relative to the structural member 3h about the longitudinal axis 7h, the first bracket element 8 is configured to rotate together with the second bracket element 9 relative to the structural member 3h about the longitudinal axis 7h. In this manner, as the second portion 13 of the connecting element 6h is caused to rotationally move relative to the structural member 3h about the longitudinal axis 7h, the first portion 12 of the connecting element 6h, which is part of the first bracket element 8, is thus correspondingly also caused to rotationally move relative to the structural member 3h about the longitudinal axis 7h. As a result, since the first portion 12 is configured to conformably interface with the skin 4, the position and orientation of the skin 4 relative to the frame structure 2 can thus be rotationally adjusted.

In this way, both an outer mould line (OML) 10 and an inner mould line (IML) 11 of the skin can be controlled to meet CAD nominal dimensions, advantageously avoiding the need for costly and complex post assembly machining operations to push, file down, or otherwise manipulate the OML 10 and/or IML 11 of the skin 4 into the desired position and orientation, to meet the tight tolerances typically required in aircraft manufacture. The OML 10 comprises an outer surface of the skin 4 and hence an outer surface of the structural assembly 1, and the IML 11 is configured to conformably interface with the first portion 12 of the connecting element 6h.

As well as being rotationally adjustable relative to the structural member 3h, the connecting element 6h and hence also the respective portion of the skin 4, can also be adjustable in one or more further degrees of freedom relative to the structural member 3h. As such, the connecting element 6h and the skin 4 can be adjusted in multiple degrees of freedom relative to the frame structure 2 to advantageously provide for improved accuracy and ease of manipulation in controlling the OML 10 and/or IML of the skin 4 to bring it in line with CAD nominal dimensions. This adjustment shall now be described with further reference to Figures 9 and 10, as well as Figures 11, 12, and 13.

As shown in Figures 9 and 10 and described above, the connecting element 6h is rotationally adjustable relative to the structural member 3h about the longitudinal axis 7h, and hence the angle of the skin 4 can be rotationally adjusted relative to the frame structure 2. The connecting element 6h, and hence also the skin 4, is thus movable relative to the structural member 3h in a first degree of freedom 16 (see Figure 10) corresponding with said rotational movement.

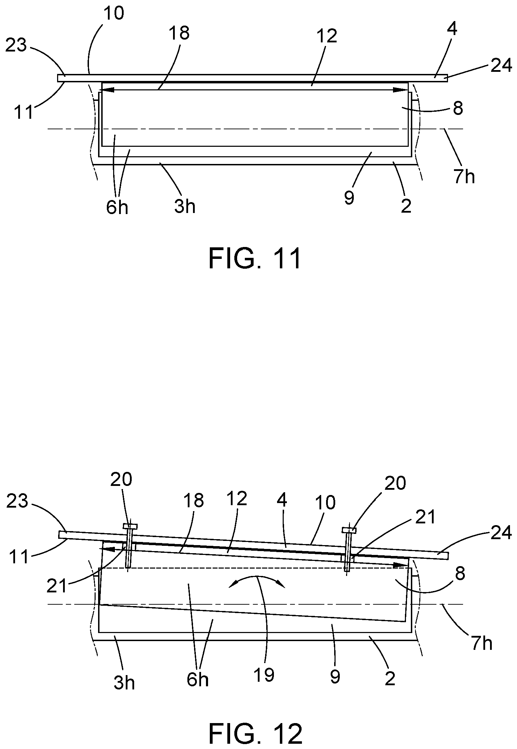

The connecting element 6h is further movable relative to the structural member 3h in a second degree of freedom 18 and a third degree of freedom 17 corresponding with a first linear movement and a second linear movement respectively, relative to the structural member 3h (see Figures 10 and 11). The first linear movement and hence the second degree of freedom 18 is generally parallel to the longitudinal axis 7h, such that the connecting element 6h is axially movable relative to the structural member 3h. The second linear movement and hence the third degree of freedom 17 is generally perpendicular to the longitudinal axis 7h and to the first linear movement and the second degree of freedom 18, such that the connecting element 6h is also vertically movable in the z direction relative to the structural member 3h. While in the example illustrated and described herein, three degrees of freedom are present, it is also envisaged that just one or two degrees of freedom may be present as required, for example, just the rotational degree of freedom 16, or just the rotational degree of freedom 16 and one of the linear degrees of freedom 17 or 18.

As such, the connecting element 6h is adjustable rotationally, and linearly, for example, axially and vertically, relative to the structural member 3h. Hence, the OML 10 and/or IML 11 of the skin 4 can be manipulated in these three degrees of freedom 16, 17, 18 relative to the frame structure 2, advantageously providing for improved control of the OML 10 and/or IML 11 to bring the dimensions of the skin 4 in line with CAD nominal dimensions, without the need for complex and costly post assembly machining operations.

Furthermore, since the first and second bracket elements 8, 9 are configured to be linearly slidable relative to one another, further degrees of adjustment are provided in that the first bracket element 8 can be axially slid or otherwise moved relative to the second bracket element 9, and the first bracket element 8 can be vertically slid or otherwise moved in the z direction relative to the second bracket element 9, and vice versa. Although, as described above, it is also envisaged that alternatively, the connecting element 6h may alternatively comprise a single, unitary bracket element, comprising both the first and second portions 12, 13 in one homogeneous piece. In such an embodiment, no such further degrees of adjustment are provided, however sliding of the connecting element 6h axially and vertically in the z direction relative to the structural element 3h is still possible.

Turning back to Figure 10, the skin 4 may be arranged to be generally parallel to and spaced apart from the frame structure 2 by a spacing 22. By way of adjustment of the connecting element 6h relative to the structural member 3h in the third degree of freedom 17, the spacing 22 can thus be increased or decreased. Whilst such movement can evidently provide for vertical adjustment of the skin 4 relative to the frame structure 2 in the z direction, such movement can also advantageously be used to adjust the orientation of the skin 4 relative to the frame structure 2. For example, such movement in the third degree of freedom 17 may be utilised to manipulate the skin 4 from a generally parallel orientation relative to the frame structure 2 into an angled non-parallel orientation, or vice versa.

As such, turning now to Figures 11, 12 and 13, the skin may be adjusted such that at a first location 23 thereon, the skin is arranged to be spaced apart from the structural member 3h and hence the frame structure 2 by a first spacing, and at a second location 24 thereon, the skin is arranged to be spaced apart from the structural member 3h and hence the frame structure 2 by a second spacing. In the condition shown in Figure 12, the first spacing is greater than the second spacing. Conversely, in the condition shown in Figure 13, the first spacing is less than the second spacing. In the condition shown in Figure 11, the first spacing is approximately equal to the second spacing, such that the skin 4 is in a generally parallel orientation. As such, the connecting element 6h and the skin 4 may thus be linearly movable relative to the structural member 3h in a diagonal movement corresponding with a seesaw-like motion 19 (see Figure 12), such that the at least one skin may be adjusted to be parallel or non- parallel as appropriate, to provide for more accurate control of the CAD nominal interfaces.

Advantageously, this seesaw-like adjustment can provide for increased flexibility in the design of the structural assembly 1, allowing for a slope in the OML 10 of the skin 4, and not the warren truss frame structure 2, as shown in Figure 12. Improved fine tuning of the tolerances of the skin 4 can thus be achieved. Similarly, as shown in Figure 13, the OML 10 can be maintained if the warren truss frame structure 2 deviates from CAD nominal dimensions.

With further reference to Figures 10 and 12, the skin 4 and the connecting element 6h may comprise one or more apertures configured to receive one or more bolts 20 and nuts 21, or other suitable fastening elements such as other mechanical fixings. The bolts 20 and nuts 21 are configured to mechanically couple the skin 4 to the connecting element 6h. As such, once the connecting element 6h and hence the skin 4 have been manipulated into the desired position and orientation relative to the structural member 3h, they may be mechanically fixed in place. However, advantageously, if further tweaking or other minor adjustments of the position are required, the bolts 20 and nuts 21 may be loosened and adjusted as appropriate, and then tightened again, to more accurately bring the skin 4 into the desired position. Such adjustments and an exemplary assembly process for the structural assembly 1 shall be discussed in more detail below.

Turning back to Figures 4 and 9, the generally cylindrical structural members 3a, 3b, 3c, 3d, 3e, 3f, 3g, 3h each have a generally circular cross-sectional profile 14 and are configured to be generally hollow. Thus, each of the structural members 3a, 3b, 3c, 3d, 3e, 3f, 3g, 3h defines an internal volume 15. In some examples, this internal volume 15 may be utilised as described below, such that the frame structure 2 can provide a secondary function in addition to being the primary load-bearing structure of the structural assembly 1.

For example, the internal volume 15 may be utilised as a storage space to house one or more wires, cables, or other electronic components or other components. Advantageously, such efficient utilisation of the space inside the structural members 3a, 3b, 3c, 3d, 3e, 3f, 3g, 3h can result in a reduction in the volume and mass of the aircraft component 1.

As another example, the frame structure 2 may alternatively be configured to act as a heat exchanger. The structural members 3a, 3b, 3c, 3d, 3e, 3f, 3g, 3h being hollow can provide that the structural members 3a, 3b, 3c, 3d, 3e, 3f, 3g, 3h are in fluid communication with one another. This provides a first fluid flow path for the flow of a first fluid (now shown) inside the frame structure 2, for example, for the flow of water, air or a fuel inside the frame structure 2. This first fluid may thus undergo heat exchange with a second fluid configured to flow around the frame structure, for example air flowing inside the structural assembly 1 inside the skin 4, such that the first fluid is in heat exchange with the second fluid. Utilising the frame structure to have a thermodynamic function as well as a mechanical function can advantageously provide for a further reduction in complexity, cost, and mass, in the design and manufacture of an aircraft. As another similar example, the frame structure 2 can be utilised as a fuel store by filling the hollow structural members 3a, 3b, 3c, 3d, 3e, 3f, 3g, 3h with fuel, to negate or reduce the need for a separate fuel tank of a large volume.

Figure 14 shows another example of the structural assembly 1 which is generally similar to that described above in relation to Figures 1 to 13, but which further comprises a second skin 26. In this example the skin 4 is an outer skin of the structural assembly 1 and is arranged on an outer surface of the frame structure 2, and the second skin 26 is an inner skin of the structural assembly 1 and is arranged on an inner surface of the frame structure 2. Similarly to the outer skin 4, the inner skin 26 also has an outer mould line (OML) and an inner mould line (IML). The inner skin 26 is also connected to the structural member 3h by a connecting element 25, which is substantially similar to the connecting element 6h, and also comprises a first bracket element 8 and a second bracket element 9. The connecting element 25 is arranged to be generally opposite to and diametrically opposed to the connecting element 6h about the circumference of the structural member 3h, such that the connecting element 6h conformably interfaces with the outer skin 4 on one side of the structural member 3h, and the connecting element 25 conformably interfaces with the inner skin 26 on an opposite side of the structural member 3h. Similarly to the connecting element 6h, the connecting element 25 is also adjustable rotationally and linearly relative to the structural member 3h. Hence, both the inner and outer skins 4, 26 can be adjusted relative to the structural member 3h. As such, both the outer surface of the structural assembly 1 and the inner surface of the structural assembly 1 can be accurately controlled to meet CAD nominal dimensions without the need for costly and complex post assembly machining operations.

In order to provide that both the connecting element 6h and the connecting element 25 can be rotationally adjustable relative to the structural member 3h about the longitudinal axis 7h, without unwanted interference, the cross-sectional profiles of the connecting elements 6h, 25 may each be configured to span less than 180 degree of the circumference of the structural member 3h, such that there is space available for the connecting elements 6h, 25 to rotate thereabouts. That is, if the connecting elements 6h, 25 were each configured to span a greater proportion of the circumference of the structural member 3h, or to the extreme, were configured to be touching, then little or no rotational adjustment would be possible. Thus, in the example shown in Figure 14, the vertical side walls 29 of the second bracket elements 9 of the connecting elements 6h, 25 are configured to terminate shorter than the length of the vertical side walls 28 of the first bracket elements 9, compared with in the example shown in Figures 9 and 10 in which the vertical side walls 29 are configured to protrude relative to the vertical side walls 28. Thus, the geometry of the cross-sectional profiles of the first and second bracket elements 8, 9 may be designed accordingly to provide for the optimum amount of rotational freedom of the connecting elements 6h, 25, where two or more connecting elements 6h, 25 are present on the same structural member 3h, for example where they are diametrically opposed relative to one another, or otherwise spaced apart from one another about the circumference of the structural member 3h.

Possible materials and methods for manufacturing the exemplary structural assemblies 1 described above shall now be described, with continued reference to Figures 4, 9 and 10 in particular.

One method of manufacturing a structural component for an aircraft, such as an aircraft fuselage, wing or door, comprises providing a structural assembly 1 as described above. To manufacture said structural component, the connecting elements 6a, 6b, 6d, 6h, 6i, 6j, 6k, 6l, 6m, 6n (and 25, if present) etc. are arranged on the structural members 3a, 3b, 3c, 3d, 3e, 3f, 3g, 3h of the frame structure 2. The connecting elements 6a, 6b, 6d, 6h, 6i, 6j, 6k, 6l, 6m, 6n, 25 etc. are then rotationally and linearly adjusted relative to the structural members 3a, 3b, 3c, 3d, 3e, 3f, 3g, 3h as described above.

Once the connecting elements 6a, 6b, 6d, 6h, 6i, 6j, 6k, 6l, 6m, 6n, 25 have been positioned into the desired position and orientation relative to the frame structure 2, they may be attached to the frame structure 2 by means of an adhesive and/or one or more mechanical fastening means. The adhesive may be cured at this stage, or later on during the manufacturing process, after the skin is in position and the desired adjustments have taken place. The mechanical fastening means may be adjustable and/or removable fastening means such as nuts and bolts. The skin 4 (and also the skin 26, if present) is then arranged on the connecting elements 6a, 6b, 6d, 6h, 6i, 6j, 6k, 6l, 6m, 6n, 25, in particular, to conformably interface with the first portions 12 thereof. At this stage, final adjustments to the position and orientation of the connecting elements 6a, 6b, 6d, 6h, 6i, 6j, 6k, 6l, 6m, 6n, 25 may be made, if the connecting elements 6a, 6b, 6d, 6h, 6i, 6j, 6k, 6l, 6m, 6n, 25 have not yet been permanently attached to the frame structure 2 - for example, if said adhesive has not yet been cured. Next, the skin 4 (and the skin 26, if present) is attached to the connecting elements 6a, 6b, 6d, 6h, 6i, 6j, 6k, 6l, 6m, 6n, 25, either permanently or removably, for example also by means of an adhesive and/or one or more mechanical fastening means such as nuts on bolts (see Figures 10 and 12 for example).

In another method of manufacturing a structural component for an aircraft, alternatively, the skin 4 (and the skin 26, if present) may be arranged on the connecting elements 6a, 6b, 6d, 6h, 6i, 6j, 6k, 6l, 6m, 6n, 25 before the adjustment of the connecting elements 6a, 6b, 6d, 6h, 6i, 6j, 6k, 6l, 6m, 6n, 25 has taken place. That is, the skins 4, 26 may be arranged on the connecting elements 6a, 6b, 6d, 6h, 6i, 6j, 6k, 6l, 6m, 6n, 25 either before or after the rotational and linear adjustment thereof relative to the frame structure 2. Furthermore, as another exemplary assembly method, it is also envisaged that a first adjustment of the connecting elements 6a, 6b, 6d, 6h, 6i, 6j, 6k, 6l, 6m, 6n, 25 may take place before the skins 4, 26 are arranged on the connecting elements 6a, 6b, 6d, 6h, 6i, 6j, 6k, 6l, 6m, 6n, 25, and then a second adjustment may take place thereafter.

As described above, adhesive and/or mechanical fastening means may be used to attach the connecting elements 6a, 6b, 6d, 6h, 6i, 6j, 6k, 6l, 6m, 6n, 25 to the structural members 3a, 3b, 3c, 3d, 3e, 3f, 3g, 3h and to the skins 4, 26. For example, adhesive may be applied to said components, and the components may then be cured to bond them together. It is envisaged that adhesive may be applied to said components before they are adjusted into the desired position, and then once in the desired position, they may be cured to bond them together in the desired position. Before said bonding takes place, final adjustments or other minor tweaks may be made. Advantageously, such adjustments can allow the OML 10 and/or IML 11 of the skins 4, 26 to be adjusted before the bonds are cured, thus compensating for tolerance variations accumulated during assembly within the primary load-bearing structure that is the frame structure 2, for example, due to casting warp.

Optionally, a laser tracking device may be used during the manufacturing process to determine the positions of the connecting elements 6a, 6b, 6d, 6h, 6i, 6j, 6k, 6l, 6m, 6n, 25 and the skins 4, 26 relative to the frame structure 2. Said positions can then be compared with CAD data, and appropriate adjustments then made based on data obtained from the laser tracking device, to bring the components in line with CAD nominal interfaces. The positions of the skins 4, 26 can thus be tracked and pushed or otherwise moved or manipulated into the desired positions to meet an acceptable tolerance, to control the OML 10 and IML 11 thereof.

The frame structure 2 may be an additively manufactured, cast, forged, welded, metallic, composite, and/or metallic composite hybrid frame structure. The skins 4, 26 may comprise a carbon fibre composite material, an automated fibre placement material, and/or aluminium, and may be hand laid. The connecting elements 6a, 6b, 6d, 6h, 6i, 6j, 6k, 6l, 6m, 6n, 25 may comprise a metallic and/or composite material. Accordingly, the attachment means, whether a curable adhesive to bond the components together, or mechanical fastening means, or a combination of both, may be selected based on the materials of said components, to provide the optimum attachment thereof.

In the examples illustrated, the connecting elements 6a, 6b, 6d, 6h, 6i, 6j, 6k, 6l, 6m, 6n, 25 and the structural members 3a, 3b, 3c, 3d, 3e, 3f, 3g, 3h are generally elongate. As such, this can advantageously allow for a modular and bespoke construction of the structural assembly 1, providing for flexibility in the design of a structural component for an aircraft. For example, the connecting elements 6a, 6b, 6d, 6h, 6i, 6j, 6k, 6l, 6m, 6n, 25, and particular, the first and second bracket elements 8, 9 thereof, may be formed as an extrusion which is cut to length to provide sufficient sections of connecting element 6a, 6b, 6d, 6h, 6i, 6j, 6k, 6l, 6m, 6n, 25 for arranging on the frame structure 2.

## Claims

1. A structural assembly (1) for an aircraft, comprising:
a frame structure (2) comprising a plurality of structural members (3a, 3b, 3c, 3d, 3e, 3f, 3g, 3h) each having a longitudinal axis (7a, 7b, 7c, 7h);
at least one skin (4) arranged on the frame structure (2); and
at least one connecting element (6a, 6b, 6d, 6h, 6i, 6j, 6k, 6l, 6m, 6n), comprising:
a first portion (12) configured to conformably interface with at least a portion (5a, 5b, 5c, 5d, 5e) of the at least one skin (4); and
a second portion (13) configured to rotationally receive at least a portion of one of said structural members (3a, 3b, 3c, 3d, 3e, 3f, 3g, 3h), such that said connecting element (6a, 6b, 6d, 6h, 6i, 6j, 6k, 6l, 6m, 6n) is rotationally movable relative to said structural member (3a, 3b, 3c, 3d, 3e, 3f, 3g, 3h) about the longitudinal axis (7a, 7b, 7c, 7h) thereof.

2. The structural assembly (1) according to claim 1, wherein the frame structure (2) comprises a truss structure, such as a warren truss or a geodesic truss.

3. The structural assembly (1) according to any of the preceding claims, wherein the structural members (3a, 3b, 3c, 3d, 3e, 3f, 3g, 3h) are generally hollow and are in fluid communication with one another to provide a first fluid flow path for the flow of a first fluid inside the frame structure (2), and wherein a second fluid is configured to flow around the frame structure (2) in a second fluid flow path, such that the first fluid is in heat exchange with the second fluid.

4. The structural assembly (1) according to any of the preceding claims, wherein the at least one skin (4) comprises an outer mould line (10) and an inner mould line (11), wherein at least a portion of the inner mould line is configured to conformably interface with the first portion of the at least one connecting element.

5. The structural assembly (1) according to any of the preceding claims, wherein the at least one skin (4) comprises a first skin (4) and a second skin (26), wherein the first skin (4) is an outer skin of an aircraft component and is configured to be arranged on an outer surface of the frame structure (2), and wherein the second skin (26) is an inner skin of an aircraft component and is configured to be arranged on an inner surface of the frame structure (2), wherein a first at least one connecting element (6a, 6b, 6d, 6h, 6i, 6j, 6k, 6l, 6m, 6n) is configured to interface with the first skin (4), and a second at least one connecting element (25) is configured to interface with the second skin.

6. The structural assembly (1) according to any of the preceding claims, wherein each of the at least one connecting elements (6a, 6b, 6d, 6h, 6i, 6j, 6k, 6l, 6m, 6n) is generally elongate and is arranged to be generally parallel to the longitudinal axis (7a, 7b, 7c, 7h) of its respective structural member (3a, 3b, 3c, 3d, 3e, 3f, 3g, 3h).

7. The structural assembly (1) according to any of the preceding claims, wherein each of the at least one connecting elements (6a, 6b, 6d, 6h, 6i, 6j, 6k, 6l, 6m, 6n) comprises a first bracket element (8) and a second bracket element (9), the first bracket element (8) comprising said first portion (12) of the connecting element (6a, 6b, 6d, 6h, 6i, 6j, 6k, 6l, 6m, 6n), and the second bracket element (9) comprising said second portion (13) of the connecting element (6a, 6b, 6d, 6h, 6i, 6j, 6k, 6l, 6m, 6n), wherein the first bracket element (8) comprises a receiving portion (27) configured to slidably receive at least a portion of the second bracket element (9), wherein the first bracket element (8) is configured to be rotationally fixed relative to the second bracket element (9) about the longitudinal axis (7a, 7b, 7c, 7h) of the respective structural member (3a, 3b, 3c, 3d, 3e, 3f, 3g, 3h).

8. The structural assembly (1) according to any of the preceding claims, wherein each of the at least one connecting elements (6a, 6b, 6d, 6h, 6i, 6j, 6k, 6l, 6m, 6n) is configured to be movable relative to its respective structural member (3a, 3b, 3c, 3d, 3e, 3f, 3g, 3h) in: a first degree of freedom (16) corresponding with said rotational movement about said longitudinal axis (7a, 7b, 7c, 7h), and in a second degree of freedom (17, 18) corresponding with a first linear movement (17, 18) relative to said structural member (3a, 3b, 3c, 3d, 3e, 3f, 3g, 3h).

9. The structural assembly (1) according to claim 8, wherein the first linear movement (18) is generally parallel to said longitudinal axis (7a, 7b, 7c, 7h).

10. The structural assembly (1) according to claim 8, wherein the at least one skin (4) is arranged to be generally parallel to and spaced apart from the frame structure (2), and wherein the first linear movement (17) is generally perpendicular to said longitudinal axis (7a, 7b, 7c, 7h), such that the spacing (22) between the at least one skin (4) and the frame structure (2) is adjustable.

11. The structural assembly (1) according to any of claims 8 to 10, when dependent on claim 7, wherein the first bracket element (8) is configured to be slidable relative to the second bracket element (9) in the second degree of freedom (17, 18).

12. The structural assembly (1) according to any of claims 8 to 11, wherein each of the at least one connecting elements (6a, 6b, 6d, 6h, 6i, 6j, 6k, 6l, 6m, 6n) is configured to be movable relative to its respective structural member (3a, 3b, 3c, 3d, 3e, 3f, 3g, 3h) in a third degree of freedom (17, 18) corresponding with a second linear movement relative to the first structural member (3a, 3b, 3c, 3d, 3e, 3f, 3g, 3h), wherein the second linear movement is generally perpendicular to the first linear movement.

13. A method of manufacturing a structural component for an aircraft, the method comprising:
providing a structural assembly (1) according to any of claims 1 to 12;
arranging the at least one connecting element (6a, 6b, 6d, 6h, 6i, 6j, 6k, 6l, 6m, 6n) on said structural member (3a, 3b, 3c, 3d, 3e, 3f, 3g, 3h);
rotationally adjusting the at least one connecting element (6a, 6b, 6d, 6h, 6i, 6j, 6k, 6l, 6m, 6n) relative to said structural member (3a, 3b, 3c, 3d, 3e, 3f, 3g, 3h);
arranging the at least one skin (4) on the first portion of the at least one connecting element (6a, 6b, 6d, 6h, 6i, 6j, 6k, 6l, 6m, 6n);
attaching the at least one connecting element (6a, 6b, 6d, 6h, 6i, 6j, 6k, 6l, 6m, 6n) to said structural member (3a, 3b, 3c, 3d, 3e, 3f, 3g, 3h); and
attaching the at least one skin (4) on the first portion of the at least one connecting element (6a, 6b, 6d, 6h, 6i, 6j, 6k, 6l, 6m, 6n).

14. The method according to claim 13, wherein the method further comprises:
applying adhesive to said structural member (3a, 3b, 3c, 3d, 3e, 3f, 3g, 3h) and/or to the second portion of the at least one connecting element (6a, 6b, 6d, 6h, 6i, 6j, 6k, 6l, 6m, 6n);
applying adhesive to said at least one skin (4) and/or the first portion of the at least one connecting element (6a, 6b, 6d, 6h, 6i, 6j, 6k, 6l, 6m, 6n); and
curing said adhesive to bond said at least one connecting element (6a, 6b, 6d, 6h, 6i, 6j, 6k, 6l, 6m, 6n) to said structural member (3a, 3b, 3c, 3d, 3e, 3f, 3g, 3h) and to said at least one skin (4);
and/or wherein the method further comprises:
attaching the at least one skin (4) to the at least one connecting element (6a, 6b, 6d, 6h, 6i, 6j, 6k, 6l, 6m, 6n) via one or more mechanical fastening means (20, 21).

15. The method according to claim 13 or claim 14, wherein the method further comprises linearly adjusting the at least one connecting element (6a, 6b, 6d, 6h, 6i, 6j, 6k, 6l, 6m, 6n) relative to said structural member (3a, 3b, 3c, 3d, 3e, 3f, 3g, 3h).
